# EUROPÄISCHE PATENTSCHRIFT

(11) **EP 3 347 521 B1**
(45) Veröffentlichungstag und Bekanntmachung des Hinweises auf die Patenterteilung: **08.10.2025**
(21) Anmeldenummer: 16756617.3
(22) Anmeldetag: 05.08.2016
(51) Int. Cl.: D21B 1/32, D21D 5/06

(54) **ROTIERENDE TROMMEL**
ROTATING DRUM
TAMBOUR ROTATIF

(30) Priorität: 07.09.2015 DE 102015217052
(43) Veröffentlichungstag der Anmeldung: 18.07.2018
(73) Patentinhaber: Voith Patent GmbH, 89522 Heidenheim (DE)
(72) Erfinder: BADER, Johannes, 88260 Argenbühl (DE); BARETH, Christoph, 88436 Eberhardzell (DE); SCHUSTER, Sebastian, 88281 Schlier-Oberankenreute (DE)
(74) Vertreter: Voith Patent GmbH - Patentabteilung
(86) Internationale Anmeldenummer: PCT/EP2016/068757
(87) Internationale Veröffentlichungsnummer: WO 2017/041968

(56) Entgegenhaltungen:
- EP-A1- 0 194 332
- EP-A1- 0 218 738
- CN-A- 104 264 522
- DE-A1- 102012 219 708
- US-B1- 6 470 898

## Beschreibung

Die Erfindung betrifft eine rotierende Trommel zur Behandlung von Faserstoff, deren Rotationsachse höchstens 10° zur Horizontalen geneigt ist, mit einer, an eine Stirnseite der Trommel angrenzenden Auflösezone, in die der Faserstoff über einen Einlauf an dieser Stirnseite zugegeben und in der dieser zur Bildung einer Faserstoffsuspension mit Wasser vermischt wird.

Mit Hilfe einer solchen, bekannten und beispielsweise in der EP 0 194 332 A1, der US 6 470 898, der DE 10 2012 219 708 A1 oder der EP 0 218 738 und CN104 264 522 A beschriebenen Vorrichtung soll in vielen Fällen verschmutztes Altpapier mit Wasser vermischt, zerkleinert und sortiert werden. Hierzu wird in der Auflösezone des meist liegenden Zylinders/Trommel das mit Wasser versetzte Altpapier durch Anheben, Rutschen und Fallen, bzw. Relativbewegungen der Stoffanteile zueinander, zerkleinert.

In der sich anschließenden Sortierzone soll dann der gelöste Faserstoff von Unrat getrennt werden. Während die Feinfraktion die Perforation, d.h. die Sortieröffnungen passiert, wird die Grobfraktion mit dem Unrat abgewiesen und separat aus der Trommel geführt.

Verfahren zur Behandlung von Altpapier, die mit solchen oder ähnlichen Trommeln arbeiten, haben den Vorteil einer besonders schonenden Auflösung, sowohl was empfindliche Fasersorten als auch sortierbar zu erhaltende, unerwünschte Begleitstoffe betrifft.

Dabei hat sich ein Trend zu immer größeren Einlauf-Öffnungen etabliert. Allerdings bringt dies häufig Probleme hinsichtlich Leckage oder Verschleiß bei berührenden Dichtelementen mit sich.

Die Aufgabe der Erfindung ist es daher eine Lösung für eine sichere und einfache Abdichtung bei großen Einlauf-Öffnungen zu schaffen.

Erfindungsgemäß wurde die Aufgabe durch die Merkmale des Anspruchs 1 gelöst.

Hierdurch kann auf effiziente Weise das Flüssigkeitsniveau am entsprechenden stirnseitigen Ende der Trommel, d.h. im Bereich des Einlaufs gesenkt werden, was einer Leckage entgegenwirkt.

Dies wiederum erlaubt die Realisierung von Einläufen mit sehr großen Einlauföffnungen und damit auch von großen Trommeln. Über diese großen Einlauföffnungen können so entsprechend größere Altpapierballen in die Trommel geführt werden, so dass sich der Aufwand für das Öffnen und Zerkleinern der zu verarbeitenden Altpapierballen reduziert.

Im Interesse einer sicheren und einfachen Konstruktion ist vorgesehen, dass der Einlauf nicht rotiert und vorzugsweise als feststehender Einlauf-Trichter ausgebildet ist. Dieser Einlauf-Trichter sollte dabei an der Stirnseite der Trommel, vorzugsweise mittig angeordnet sein. Die mittige Anordnung bezieht sich hier auf den Übergang des Einlauf-Trichters in die Trommel.

Um den Transport des Faserstoffs in die Trommel zu erleichtern, sollte der Einlauf-Trichter entsprechend zur Rotationsachse geneigt sein.

Des Weiteren ist es vorteilhaft, wenn der Einlauf-Trichter in die Trommel hineinragt. Bereits diese einfache Maßnahme bringt den Faserstoff und das Wasser von dem bezüglich Leckage kritischen Bereich der Kopplung von feststehendem Einlauf und rotierender Trommel weg.

Zusätzlich ist der Übergang zwischen feststehender Trommel und rotierender Trommel abzudichten, was über eine Labyrinth-Dichtung erfolgt. Dabei sind an einem stehenden oder rotierenden Element der Labyrinth-Dichtung Führungselemente angeordnet, die Störstoffe wieder zurück in die Trommel führen.

Wegen ihrer einfachen aber robusten Konstruktion kommen an der Innenseite der Trommel befestigte Förder-Leisten als Förderelemente zum Einsatz.

Alternativ oder ergänzend können die Förderelemente beispielsweise aber auch von Förderspiralen gebildet werden.

Zur Erzielung einer ausreichend großen Förderleistung sind die Förder-Leisten hierzu entsprechend zur Rotationsachse geneigt. Dies bedeutet, dass das in Förderrichtung weisende Ende der Förder-Leiste in Rotationsrichtung nachläuft.

Entsprechend der erforderlichen Förderwirkung kann die Höhe der Förder-Leisten über der Innenseite der Trommel vom Einlauf aus vorzugsweise kontinuierlich abnehmen. Eine konstante Höhe der Förder-Leisten erfordert mehr Steifigkeit und Material.

Um die Förderelemente zu stabilisieren, kann es vorteilhaft sein, wenn der Einlauf-Bereich mit den Förderelementen einerseits von der Stirnseite der Trommel und andererseits von einer mittig offenen Trennwand begrenzt wird.

Diese Trennwand bildet eine ringförmige Barriere, über die Faserstoff und Wasser vom Einlauf zum gegenüberliegenden Ende der Trommel mittels der Förderelemente befördert wird.

Gleichzeitig können die Förder-Leisten an der Stirnseite der Trommel und/oder der angrenzenden Trennwand fixiert werden.

Bei sehr großen Faserstoffmengen oder großen Trommeldurchmessern kann es an dieser und eventuell auch noch weiteren, in Förderrichtung folgenden Trennwänden zu einem Stau kommen.

Daher ist es von Vorteil, wenn an der Innenseite der Trommel auf der dem Einlauf-Bereich gegenüberliegenden Seite der entsprechenden Trennwand weitere Förderelemente angeordnet sind, die den Faserstoff und das Wasser axial von der angrenzenden Trennwand der Trommel wegfördern.

Diese weiteren Förderelemente können ebenfalls als an der Innenseite der Trommel befestigte, weitere Förder-Leisten ausgebildet sein. Da hierbei meist eine geringe Förderwirkung erforderlich ist, kann es genügen, wenn die weiteren Förder-Leisten eine geringere Höhe über der Innenseite der Trommel und/oder eine geringere Neigung zur Rotationsachse als die Förder-Leisten im Einlauf-Bereich aufweisen. Hierdurch können die weiteren Förder-Leisten neben der Förderwirkung auch stärker zur Vermischung beitragen.

Zur Unterstützung der Auflösung des Faserstoffs und dessen Vermischung mit dem Wasser sollten zumindest außerhalb des Bereichs mit den Förderelementen Hebe-Leisten ohne axiale Förderwirkung an der Innenseite der Trommel angeordnet werden.

Diese Hebe-Leisten sind mit Vorteil in Umfangsrichtung in größerer Anzahl als Förder-Leisten vorhanden. Darüber hinaus haben die Hebe-Leisten wegen ihrer abweichenden Funktion eine geringere Höhe als die Förder-Leisten.

Falls dabei axial entlang der Trommel mehrere Hebe-Leisten hintereinander angeordnet werden, so sollten diese zur Minimierung von Vibrationen in Umfangsrichtung der Trommel zumindest leicht versetzt zueinander liegen.

Des Weiteren kann es für die effiziente Behandlung des Faserstoffs von Vorteil sein, wenn sich axial an die Auflösezone eine Sortierzone anschließt, in der die Trommel perforiert ist, wobei eine Feinfraktion die Perforation durchströmt und eine Grobfraktion von dieser abgewiesen wird.

Nachfolgend soll die Erfindung an zwei Ausführungsbeispielen näher erläutert werden.

In der beigefügten Zeichnung zeigt:
Figur 1: einen schematischen Querschnitt durch eine rotierende Trommel,
Figur 2: einen Teilquerschnitt durch den Einlaufbereich 4 der Trommel,
Figur 3: einen schematischen Teilquerschnitt des Trommelanfangs einer anderen Trommel mit mehreren Trennwänden 9 und
Figur 4: einen Abschnitt der Innenwand der Trommel gemäß Figur 3 in ebener Darstellung.

Die zylindrische Trommel ist normalerweise außen auf Rollen gelagert und wird über einen Antrieb in Rotation versetzt, wobei die Rotationsachse 2 geringfügig geneigt zur Waagerechten verläuft. Diese geringe Neigung unterstützt den Transport in Richtung Auslauf.

Zur Auflösung des Altpapiers besitzt die Trommel hier an die linke Stirnseite 3 angrenzend eine Auflösezone 4 mit einem Einlauf 5. In der Auflösezone 4 wird der Faserstoff 1 in Form von relativ leicht auflösbarem Altpapier intensiv mit Wasser vermischt, wobei es infolge der Hebe-, Rutsch- und Fallbewegungen zu einer Zerkleinerung des aufgeweichten Papiermaterials kommt.

Die Zuführung des Faserstoffs 1 erfolgt hier über einen feststehenden Einlauf 5 in Form eines Einlauf-Trichters.

Dabei wird der zur Rotationsache 2 geneigte Einlauf-Trichter in der Mitte der Stirnseite 3 in die Trommel geführt.

Die Abdichtung des Einlaufs 5 gegenüber der Trommel erfolgt über eine bekannte Labyrinth-Dichtung 7.

Wegen der hohen Leckagegefahr im Bereich dieser Dichtung 7 ragt der Einlauf 5 in die Trommel hinein. Auf diese Weise wird der Faserstoff 1 bereits etwas von der Dichtung 7 weggefördert. Außerdem sind an einem rotierenden Element der Labyrinth-Dichtung 7 nicht-dargestellte Führungselemente in Form schräg gestellter Leisten angeordnet, die Störstoffe wieder zurück in die Trommel leiten. Am stehenden Element der Labyrinth-Dichtung 7 kann zusätzlich ein sich aufweitender Halbring vorhanden sein, der ebenfalls den Faserstoff 1 aus der Dichtung 7 wegführt.

Zusätzlich befinden sich an der Innenseite der Trommel im Bereich des Einlaufs 5 Förderelemente 6, die den Faserstoff 1 und das Wasser axial von der angrenzenden Stirnseite 3 der Trommel wegfördern.

Hierzu sind die 6 bis 10 Förderelemente 6 als an der Innenseite der Trommel befestigte und zur Rotationsachse 2 geneigte Förder-Leisten ausgebildet.

Zur Erzielung einer zum gegenüberliegenden Auslauf der Trommel gerichteten axialen Förderwirkung läuft das in Förderrichtung weisende Ende der Förder-Leiste bezüglich des anderen Endes in Rotationsrichtung 14 nach.

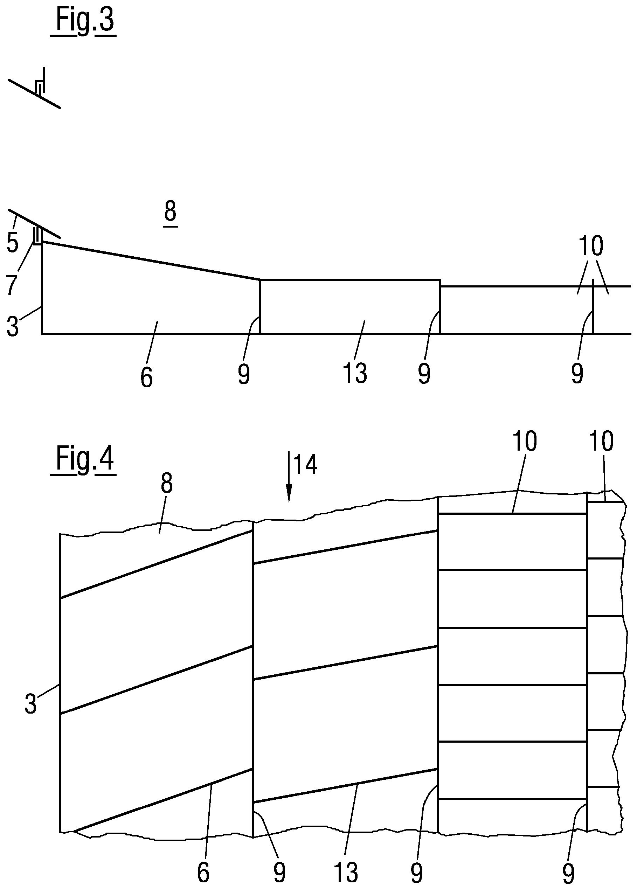

Entsprechend der erforderlichen Förderwirkung, welche im Bereich des Einlaufs 5 am größten sein sollte, kann die Höhe der Förder-Leisten über der Innenseite der Trommel vom Einlauf 5 aus, wie in Figur 3 dargestellt, kontinuierlich abnehmen.

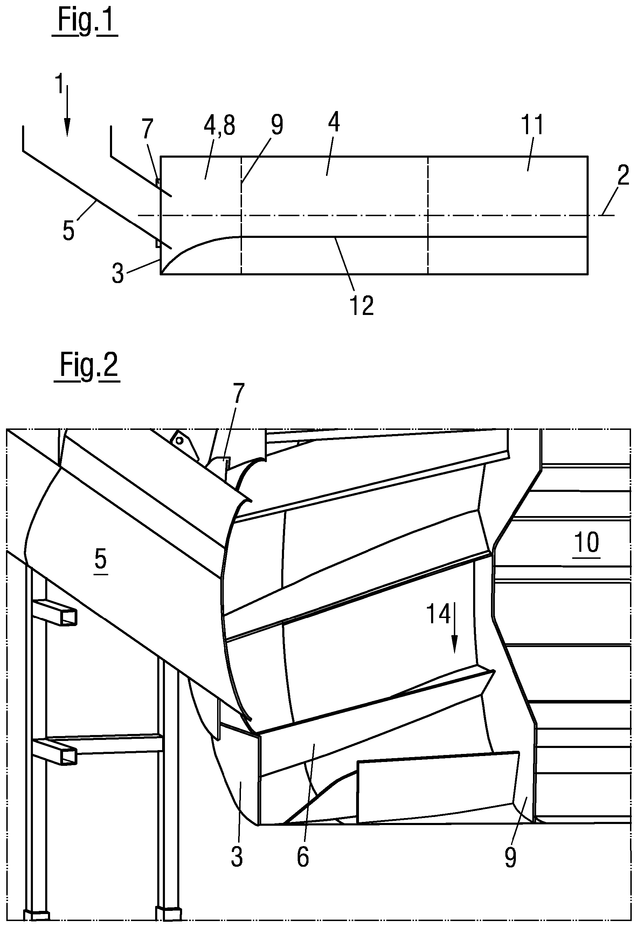

Figur 1 zeigt den mittels der Erfindung angestrebten Verlauf 12 des Füllstandes mit Faserstoff und Wasser entlang der Trommel, wobei der Füllstand im mittleren Teil der Auflösezone 4 etwa bei 30% liegt.

Der mit Förderelementen 6 versehene Einlauf-Bereich 8 der Auflösezone 4 wird wie in Figur 2 deutlich zu erkennen, auf der einen Seite von der Stirnseite 3 der Trommel und auf der anderen Seite von einer mittig offenen Trennwand 9 begrenzt.

Dabei sind die Förder-Leisten mit der angrenzenden Stirnseite 3 der Trommel sowie der Trennwand 9 fest verbunden, insbesondere verschweißt, was für eine ausreichende Stabilität der Förder-Leisten sorgt.

Der zugführte Faserstoff 1 kann von den Förderelementen 6 meist problemlos durch die Öffnung der Trennwand 9 transportiert werden.

Bei sehr großen Faserstoffmengen oder großen Trommeldurchmessern kann es insbesondere an dieser und eventuell auch noch weiteren, in Förderrichtung folgenden Trennwänden 9 jedoch zu einem Stau kommen. Erreicht der Rückstau dabei einen entsprechenden Umfang, so kann dies den Verlauf 12 des Füllstandes soweit verändern, dass Faserstoff 1 und Wasser in den Bereich der Dichtung 7 gelangen.

Daher sind bei der Ausführung gemäß Figur 3 und 4 an der Innenseite der Trommel auf der dem Einlauf-Bereich 8 gegenüberliegenden Seite der entsprechenden Trennwand 9 weitere Förderelemente 13 angeordnet, die den Faserstoff 1 und das Wasser axial von dieser angrenzenden Trennwand 9 der Trommel wegfördern.

Die weiteren Förderelemente 13 sind ebenfalls als an der Innenseite der Trommel befestigte, weitere Förder-Leisten ausgebildet. Da hierbei eine geringe Förderwirkung erforderlich ist, genügt es, wenn die weiteren Förder-Leisten eine geringere Höhe über der Innenseite der Trommel und eine geringere Neigung zur Rotationsachse 2 als die Förder-Leisten im Einlauf-Bereich 8 aufweisen. Hierdurch können die weiteren Förder-Leisten neben der Förderwirkung auch stärker zur Vermischung ähnlich den nachfolgend beschriebenen Hebe-Leisten 10 beitragen.

Um die Bewegung des Altpapiers sowie der dabei entstehenden Faserstoffsuspension zu unterstützen, besitzt die Trommel zumindest in der Auflösezone 4 außerhalb des Abschnitts mit den Förderelementen 6,13 auf der Innenseite Hebeleisten 10 o.ä. Einbauten ohne axiale Förderwirkung. Solche Einbauten sind in vielfältiger Form bekannt und werden auf den jeweiligen Verwendungszweck abgestimmt.

Diese Hebe-Leisten 10 sind entsprechend Figur 4 in Umfangsrichtung in größerer Anzahl als Förder-Leisten vorhanden. Darüber hinaus haben die Hebe-Leisten 10 wegen ihrer abweichenden Funktion eine geringere Höhe als die Förder-Leisten.

An den Abschnitt mit den Förderelementen 6,13 schließen sich bei Figur 3 und 4 in Förderrichtung mehrere, durch Trennwände 9 abgegrenzte Abschnitte mit Hebe-Leisten 10 an.

Zur Minimierung von Vibrationen oder gar Schlägen infolge gleichzeitig in der Trommel herunterfallenden Faserstoffs 1 sind die jeweils axial entlang der Trommel hintereinander angeordneten Hebe-Leisten 10 in Umfangsrichtung der Trommel zumindest leicht versetzt zueinander ausgerichtet.

Die bei dieser Auflösung entstehende Faserstoffsuspension hat eine Stoffdichte von ca. 18%.

Zur weiteren Behandlung des Faserstoffs 1 schließt sich gemäß Figur 1 axial an die Auflösezone 4 eine Sortierzone 11 an, in der die Trommel perforiert ist, wobei eine Feinfraktion die Perforation durchströmt und aus der Trommel geleitet wird.

Der von dieser Perforation abgewiesene Teil wird als Grobfraktion bzw. Rejekt über einen Auslass an der Stirnseite der Trommel abgeführt.

Oberhalb der Sortierzone 11 ist oft eine Sprüheinrichtung angeordnet, welche Wasser auf die Perforation richtet. Dies reinigt die Perforation und führt außerdem zu einer weiteren Verdünnung der Faserstoffsuspension innerhalb der Sortierzone 11.

## Patentansprüche

1. Rotierende Trommel mit nicht rotierendem Einlauf zur Behandlung von Faserstoff (1), deren Rotationsachse (2) höchstens 10° zur Horizontalen geneigt ist, mit einer, an eine Stirnseite (3) der Trommel angrenzenden Auflösezone (4), wobei in die Auflösezone der Faserstoff (1) an dieser Stirnseite (3) zugegeben und in der Auflösezone dieser Faserstoff zur Bildung einer Faserstoffsuspension mit Wasser vermischt wird wobei an der Innenseite der Trommel im Bereich des Einlaufs (5) Förderelemente (6) angeordnet sind, die den Faserstoff (1) und das Wasser axial von der an den Einlauf angrenzenden Stirnseite (3) der Trommel wegfördern, wobei die Förderelemente (6) als an der Innenseite der Trommel befestigte Förder-Leisten ausgebildet sind , **dadurch gekennzeichnet, dass** die Förder-Leisten zur Rotationsachse (2) geneigt sind, wobei für das Wegfördern das in Förderrichtung weisende Ende der Förder-Leiste in Rotationsrichtung nachläuft, und dass der nicht rotierende Einlauf (5) gegenüber der rotierenden Trommel über eine Labyrinth-Dichtung (7) abgedichtet ist.

2. Rotierende Trommel nach Anspruch 1, **dadurch gekennzeichnet, dass** vorzugsweise an einem rotierenden Element der Labyrinth-Dichtung Führungselemente angeordnet sind, die Störstoffe wieder zurück in die Trommel führen.

3. Rotierende Trommel nach Anspruch 1, **dadurch gekennzeichnet, dass** die Höhe der Förder-Leisten vom Einlauf (5) aus vorzugsweise kontinuierlich abnimmt.

4. Rotierende Trommel nach einem der vorhergehenden Ansprüche, **dadurch gekennzeichnet, dass** der Einlauf-Bereich (8) mit den Förderelementen (6) einerseits von der Stirnseite (3) der Trommel und andererseits von einer mittig offenen Trennwand (9) begrenzt wird.

5. Rotierende Trommel nach Anspruch 4, **dadurch gekennzeichnet, dass** an der Innenseite der Trommel auf der dem Einlauf-Bereich (8) gegenüberliegenden Seite der Trennwand (9) weitere Förderelemente (13) angeordnet sind, die den Faserstoff (1) und das Wasser axial von der angrenzenden Trennwand (9) der Trommel wegfördern.

6. Rotierende Trommel nach Anspruch 5, **dadurch gekennzeichnet, dass** die weiteren Förderelemente (13) als an der Innenseite der Trommel befestigte, weitere Förder-Leisten ausgebildet sind.

7. Rotierende Trommel nach Anspruch 6, **dadurch gekennzeichnet, dass** die weiteren Förder-Leisten eine geringere Höhe und/oder eine geringere Neigung zur Rotationsachse (2) als die Förder-Leisten im Einlauf-Bereich (8) aufweisen.

8. Rotierende Trommel nach einem der vorhergehenden Ansprüche, **dadurch gekennzeichnet, dass** außerhalb des Bereichs mit den Förderelementen (6,13) Hebe-Leisten (10) ohne axiale Förderwirkung an der Innenseite der Trommel angeordnet sind.

9. Rotierende Trommel nach Anspruch 8, **dadurch gekennzeichnet, dass** die Hebe-Leisten (10) eine geringere Höhe als die Förder-Leisten haben.

10. Rotierende Trommel nach Anspruch 8 oder 9 **dadurch gekennzeichnet, dass** axial entlang der Trommel mehrere Hebe-Leisten (10) hintereinander und in Umfangsrichtung der Trommel versetzt zueinander angeordnet sind.

11. Rotierende Trommel nach einem der vorhergehenden Ansprüche, **dadurch gekennzeichnet, dass** sich axial an die Auflösezone (4) eine Sortierzone (11) anschließt, in der die Trommel perforiert ist, wobei eine Feinfraktion die Perforation durchströmt und eine Grobfraktion von dieser abgewiesen wird.

## Claims

1. Rotating drum having a non-rotating inlet for treating fibrous material (1), the axis of rotation (2) thereof being inclined relative to the horizontal by at most 10°, having a dissolving zone (4) which is adjacent to an end face (3) of the drum, wherein the fibrous material (1) is added to the dissolving zone at this end face (3), and this fibrous material is mixed with water in the dissolving zone so as to form a fibrous suspension, wherein disposed on the inside of the drum, in the region of the inlet (5), are conveying elements (6) which convey the fibrous material (1) and the water axially away from the end face (3) of the drum that is adjacent to the inlet, wherein the conveying elements (6) are configured as conveying strips that are fastened to the inside of the drum, **characterized in that** the conveying strips are inclined relative to the rotation axis (2), wherein, for conveying away, the end of the conveying strip pointing in the conveying direction trails in the rotation direction, and **in that** the non-rotating inlet (5) is sealed in relation to the rotating drum by way of a labyrinth seal (7).

2. Rotating drum according to Claim 1, **characterized in that** guiding elements, which return impurities back into the drum, are preferably disposed on a rotating element of the labyrinth seal.

3. Rotating drum according to Claim 1, **characterized in that** the height of the conveying strips preferably decreases continuously from the inlet (5).

4. Rotating drum according to one of the preceding claims, **characterized in that** the inlet region (8) having the conveying elements (6) is delimited on one side by the end face (3) of the drum, and on the other side by a centrically open separation wall (9).

5. Rotating drum according to Claim 4, **characterized in that** disposed on the inside of the drum, on the side of the separation wall (9) that lies opposite the inlet region (8), are further conveying elements which convey the fibrous material (1) and the water axially way from the adjacent separation wall (9) of the drum.

6. Rotating drum according to Claim 5, **characterized in that** the further conveying elements (13) are configured as further conveying strips which are fastened to the inside of the drum.

7. Rotating drum according to Claim 6, **characterized in that** the further conveying strips have a lesser height and/or a lesser inclination relative to the rotation axis (2) than the conveying strips in the inlet region (8).

8. Rotating drum according to one of the preceding claims, **characterized in that** disposed on the inside of the drum, outside the region having the conveying elements (6, 13), are lifting strips (10) without an axial conveying effect.

9. Rotating drum according to Claim 8, **characterized in that** the lifting strips (10) have a lesser height than the conveying strips.

10. Rotating drum according to Claim 8 or 9, **characterized in that** a plurality of lifting strips (10) are disposed in succession axially along the drum and so as to be mutually offset in the circumferential direction of the drum.

11. Rotating drum according to one of the preceding claims, **characterized in that** a sorting zone (11), in which the drum is perforated, is axially adjacent to the dissolving zone (4), wherein a fine fraction flows through the perforation and a coarse fraction is rejected by the latter.

## Revendications

1. Tambour rotatif, comprenant une entrée non rotative, destiné au traitement de matière fibreuse (1), dont l'axe de rotation (2) est incliné d'au plus 10° par rapport à l'horizontale, comprenant une zone de désintégration (4) adjacente à une face frontale (3) du tambour, la matière fibreuse (1) étant introduite dans la zone de désintégration au niveau de cette face frontale (3) et mélangée à de l'eau dans la zone de désintégration afin de former une suspension de matière fibreuse, des éléments de transport (6) étant agencés à l'intérieur du tambour, dans la zone de l'entrée (5), qui transportent la matière fibreuse (1) et l'eau axialement à partir de la face frontale (3) du tambour adjacente à l'entrée, les éléments de transport (6) étant réalisés sous la forme de barres de transport fixées à l'intérieur du tambour, **caractérisé en ce que** les barres de transport sont inclinées par rapport à l'axe de rotation (2), l'extrémité de la barre de transport qui pointe dans le sens de transport se déplaçant dans le sens de rotation pour le transport, et **en ce que** l'entrée non rotative (5) est rendue étanche par rapport au tambour rotatif au moyen d'un joint labyrinthe (7).

2. Tambour rotatif selon la revendication 1, **caractérisé en ce que** des éléments de guidage sont agencés de préférence sur un élément rotatif du joint labyrinthe, lesquels renvoient les matières indésirables dans le tambour.

3. Tambour rotatif selon la revendication 1, **caractérisé en ce que** la hauteur des barres de transport diminue de préférence de manière continue à partir de l'entrée (5).

4. Tambour rotatif selon l'une des revendications précédentes, **caractérisé en ce que** la zone d'entrée (8) comprenant les éléments de transport (6) est délimitée d'une part par la face frontale (3) du tambour et d'autre part par une paroi de séparation (9) ouverte au centre.

5. Tambour rotatif selon la revendication 4, **caractérisé en ce qu'**à l'intérieur du tambour, sur le côté de la cloison (9) opposé à la zone d'entrée (8), sont agencés d'autres éléments de transport (13) qui transportent axialement la matière fibreuse (1) et l'eau en éloignement de la cloison adjacente (9) du tambour.

6. Tambour rotatif selon la revendication 5, **caractérisé en ce que** lesdits autres éléments de transport (13) sont réalisés sous la forme d'autres barres de transport fixées à l'intérieur du tambour.

7. Tambour rotatif selon la revendication 6, **caractérisé en ce que** lesdites autres barres de transport présentent une hauteur et/ou une inclinaison par rapport à l'axe de rotation (2) inférieures à celles des barres de transport situées dans la zone d'entrée (8).

8. Tambour rotatif selon l'une des revendications précédentes, **caractérisé en ce qu'**à l'extérieur de la zone comprenant les éléments de transport (6, 13), des barres de levage (10) sans effet de transport axial sont agencées à l'intérieur du tambour.

9. Tambour rotatif selon la revendication 8, **caractérisé en ce que** les barres de levage (10) ont une hauteur inférieure à celle des barres de transport.

10. Tambour rotatif selon la revendication 8 ou la revendication 9, **caractérisé en ce que** plusieurs barres de levage (10) sont agencées axialement le long du tambour, les unes derrière les autres et décalées les unes par rapport aux autres dans la direction circonférentielle du tambour.

11. Tambour rotatif selon l'une des revendications précédentes, **caractérisé en ce qu'**une zone de tri (11) est raccordée axialement à la zone de désintégration (4), dans laquelle le tambour est perforé, une fraction fine passant à travers la perforation et une fraction grossière étant rejetée par celle-ci.
